# EUROPÄISCHE PATENTSCHRIFT

(11) **EP 4 620 705 B1**
(45) Veröffentlichungstag und Bekanntmachung des Hinweises auf die Patenterteilung: **30.09.2026**
(21) Anmeldenummer: 25164941.4
(22) Anmeldetag: 20.03.2025
(51) Int. Cl.: B60C 29/00, F16K 15/20

(54) **REIFENVENTIL UND VENTILEINSATZ FÜR EIN REIFENVENTIL**
TIRE VALVE AND VALVE INSERT FOR A TIRE VALVE
VALVE DE PNEU ET INSERT DE VALVE POUR VALVE DE PNEU

(30) Priorität: 20.03.2024 DE 102024107936
(43) Veröffentlichungstag der Anmeldung: 24.09.2025
(73) Patentinhaber: AIGO-TEC GmbH, 89537 Giengen (DE)
(72) Erfinder: Ströbele, Christoph, 89428 Syrgenstein (DE)
(74) Vertreter: Dr. Weitzel & Partner

(56) Entgegenhaltungen:
- FR-A1- 2 843 439
- FR-A1- 3 086 887
- JP-U- S59 144 269
- US-A- 3 712 328
- US-A1- 2007 246 099
- US-A1- 2015 000 763

## Beschreibung

Die vorliegende Erfindung betrifft ein Reifenventil, insbesondere für ein Kraftfahrzeug, mit einem Ventilschaft und einem im Ventilschaft eingesetzten Ventileinsatz gemäß dem Oberbegriff von Anspruch 1. Die vorliegende Erfindung betrifft ferner einen Ventileinsatz für ein solches Reifenventil.

Reifenventile sind in verschiedenen Ausführungsformen bekannt, beispielsweise als Dunlop-Ventil, Schrader-Ventil, Sclaverand-Ventil und Regina-Ventil. Schrader-Ventile werden beispielsweise als Fahrradventil und Autoventil, das heißt als Ventil für einen Fahrradreifen und als Ventil für den Reifen eines Kraftfahrzeugs, verwendet.

Schrader-Ventile weisen einen Ventilschaft und einen in den Ventilschaft eingeschraubten Ventileinsatz auf. Hierfür weist der Ventilschaft ein entsprechendes Innengewinde und der Ventileinsatz ein komplementäres Außengewinde auf. Auch die Außenseite des Ventilschafts ist mit einem Außengewinde versehen, um eine Ventilkappe aufschrauben zu können. Die Ventilkappe ist notwendig, um zu verhindern, dass sich Fremdkörper oder Schmutz im Bereich des Lufteinlassendes im Ventilschaft ansammelt, der dann beim Einpressen von Druckluft in das Lufteinlassende, um den Reifen aufzupumpen, mit der Druckluft ins Innere des Ventileinsatzes gefördert wird und die Funktion des dort vorgesehenen Luftventils beeinträchtigen kann. Zudem üben die beiden im selben Axialabschnitt auf entgegengesetzten Seiten des Ventilschafts vorgesehenen Gewinde, nämlich das Innengewinde und das Außengewinde, eine ungünstige Kerbwirkung auf den Ventilschaft aus.

Das originäre Schrader-Ventil, das in US 495 064 beschrieben wird, weist auf der Außenseite des Ventilschafts ein Luftventil mit einem Ventilkörper auf, der mit einer Dichtpackung auf einer Innenseite einer auf den Ventilschaft geschraubten Hülse als Ventilsitz zusammenarbeitet. Das Öffnen und Schließen des Luftventils erfolgt durch Verdrehen einer Überwurfmutter auf dem Ventilschaft, durch welche die Hülse entlang des Ventilschafts und damit relativ zum Ventilkörper verschoben wird. Am Lufteinlassende der Hülse ist ein Rückschlagventil vorgesehen, das bei geöffnetem Luftventil ein Ausströmen von Druckluft aus dem Reifen in den Luftkompressor vermeidet.

Moderne Schrader-Ventile weisen hingegen ein Rückschlagventil als Luftventil im Ventileinsatz auf, welches auch als Hauptventil bezeichnet werden kann, da es das maßgebliche Ventil zum Verhindern von Luftaustritt aus dem Reifen darstellt. Eine auf den Ventilschaft aufgeschraubte Ventilkappe kann eine zusätzliche Dichtwirkung haben.

US 2023/0211637 A1 offenbart ein Ventilsystem mit einem Ventilschaft, einer in den Ventilschaft stirnseitig eingeschraubten Komponente, in der eine einen Luftdurchgang der Komponente in Abhängigkeit einer Druckdifferenz öffnende und schließende Ventilkugel eingesetzt ist, und einer auf die Komponente stirnseitig aufgeschraubten Ventilkappe, die zusammen mit einem in der Komponente gehaltenen Stößel ein federvorgespanntes Rückschlagventil am Lufteinlassende des Ventilsystems ausbildet. Das Ventilsystem weist einen komplexen Aufbau mit vielen aneinander abzudichtenden Bauteilen auf und ist daher teuer in der Herstellung.

EP 2 724 875 A1 offenbart eine Ventilkappe zum Aufschrauben auf den Ventilschaft eines Reifenventils, wobei ein Rückschlagventil in die Ventilkappe integriert ist.

JP S59 144269 U offenbart ein Reifenventil mit den jeweils im Oberbegriff der Ansprüche 1 und 17 offenbarten Merkmalen.

Der vorliegenden Erfindung liegt die Aufgabe zugrunde, ein Reifenventil mit einem Ventilschaft und einem im Ventilschaft eingesetzten Ventileinsatz, der ein Rückschlagventil umfasst, und einen entsprechenden Ventileinsatz derart zu verbessern, dass auf eine Ventilkappe am Lufteinlassende verzichtet werden kann. Bevorzugt soll sich das Reifenventil durch einen kompakten, kostengünstigen, leicht montierbaren Aufbau auszeichnen, der ungünstige Kerbwirkungen vermeidet.

Die erfindungsgemäße Aufgabe wird durch ein Reifenventil mit den Merkmalen von Anspruch 1 und einen Ventileinsatz mit den Merkmalen von Anspruch 17 gelöst. Die abhängigen Ansprüche beschreiben vorteilhafte und besonders zweckmäßige Ausgestaltungen der Erfindung.

Ein erfindungsgemäßes Reifenventil weist einen Ventilschaft und einen in den Ventilschaft eingesetzten Ventileinsatz auf. Der Ventilschaft und der Ventileinsatz umschließen einen Luftdurchgang, der sich in einer Axialrichtung von einem Lufteinlassende an einem ersten axialen Ende des Ventilschafts zu einem Luftauslassende an einem zweiten axialen Ende des Ventilschafts erstreckt.

Der Ventileinsatz umfasst eine Außenhülse, die den Luftdurchgang umschließt und in der ein Rückschlagventil mit einem Ventilkörper und einem Ventilsitz im Luftdurchgang angeordnet ist.

Erfindungsgemäß weist der Ventilschaft am Lufteinlassende eine Verjüngung und/oder einen radial inneren Vorsprung auf, an der/dem ein im Luftdurchgang zusätzlich zu dem Rückschlagventil angeordneter Stößel federvorgespannt anliegt. Der Ventilschaft ist einteilig ausgeführt, wobei der Ventileinsatz vollständig innerhalb des einteiligen Ventilschafts angeordnet ist und von diesem vollumfänglich umschlossen wird. Somit kann der Ventilschaft ein sicheres abgedichtetes Gehäuse für den Ventileinsatz ausbilden, das den Ventileinsatz vollständig aufnimmt, sodass der Ventilschaft den Ventileinsatz auf dessen radial äußeren Oberfläche vollumfänglich umgibt und auch in der Axialrichtung beidseitig über den Ventileinsatz hinausragt.

Das erfindungsgemäße Reifenventil ist kostengünstig herstellbar, indem beispielweise der Ventileinsatz vom Lufteinlassende aus in den Ventilschaft eingesetzt wird und anschließend der Ventilschaft am Lufteinlassende derart verformt, insbesondere umgebogen oder umgebördelt, wird, dass er den radial inneren Vorsprung oder die Verjüngung ausbildet, wobei in diesem Zustand der Ventileinsatz insbesondere formschlüssig, vorteilhaft federvorgespannt im Ventilschaft gehalten wird.

Durch die erfindungsgemäße Ausgestaltung wird das Eindringen von Schmutz oder Fremdkörpern in das Lufteinlassende des Ventilschafts auch dann vermieden, wenn das Reifenventil gemäß einer bevorzugten Ausführungsform ventilkappenfrei ausgeführt ist. Das bedeutet, dass der Ventilschaft keine Aufnahme, insbesondere kein Außengewinde am Lufteinlassende zum Aufsetzen beziehungsweise Aufschrauben einer Ventilkappe umfasst.

Bevorzugt verschließt der Stößel im an der Verjüngung oder am radial inneren Vorsprung anliegenden Zustand das Lufteinlassende luftdicht. Somit kann der Stößel ein zweites Rückschlagventil im Ventilschaft darstellen, zusätzlich zu dem Hauptventil, das durch das Rückschlagventil im Ventileinsatz gebildet wird.

Gemäß einer Ausführungsform der Erfindung ist im Luftdurchgang in Reihe zu dem Ventileinsatz auf der Seite des Luftauslassendes, also zwischen dem Ventileinsatz und dem Luftauslassende, wenigstens ein weiteres den Luftdurchgang versperrendes Ventil vorgesehen, um eine Sicherheitsvariante mit wenigstens doppelter Abdichtung oder, bei einer Dichtfunktion des Stößels, mit wenigstens dreifacher Abdichtung des Luftdurchgangs zu erreichen, wobei die Dichtstellen im Luftdurchgang in Reihe zueinander angeordnet sind.

Bevorzugt sind der Stößel und der Ventilkörper des Rückschlagventils in einer Bewegung in der Axialrichtung miteinander zwangsgekoppelt. Das bedeutet, dass immer dann, wenn das Rückschlagventil öffnet, auch der Stößel vom radial inneren Vorsprung des Ventilschafts abhebt. Bevorzugt sind der Stößel und der Ventilkörper des Rückschlagventils in der Axialrichtung starr aneinander angeschlossen. Somit wird immer ein sicheres gleichzeitiges Öffnen erreicht.

Gemäß einer besonders vorteilhaften Ausführungsform der Erfindung ist auf der oder in der Außenhülse eine Druckfeder angeordnet, die insbesondere axial aus der Außenhülse hervorsteht und die einerseits den Stößel in Richtung des Lufteinlassendes druckbeaufschlagt und sich andererseits in Richtung des Luftauslassendes an der Außenhülse abstützt. Damit wird auf den Ventileinsatz eine Axialkraft in Richtung des Luftauslassendes ausgeübt, die ein Halten des Ventileinsatzes entgegen dem Luftdruck am Luftauslassende unterstützt. Insbesondere bei einer solchen Ausgestaltung, jedoch auch abweichend hiervon, kann der Ventileinsatz gewindefrei im Ventilschaft eingesetzt, insbesondere eingepresst werden. Das bedeutet, dass im Ventilschaft kein Innengewinde vorgesehen ist, in welches der Ventileinsatz eingeschraubt ist. Bevorzugt ist der Ventilschaft vollkommen innengewindefrei und/oder zumindest in einem axialen Abschnitt, in dem der Ventileinsatz angeordnet ist, vollkommen gewindefrei. Damit wird nicht nur die Herstellung des Reifenventils erleichtert und beschleunigt, weil ein zeitaufwändiges Gewindeschneiden entfallen kann, sondern es können auch ungünstige Kerbwirkungen vermieden werden.

Der Stößel ist beispielsweise auf einer Ventilstange, insbesondere kraft- und/oder formschlüssig, angeordnet oder einteilig mit dieser ausgebildet, wobei die Ventilstange bevorzugt auch den Ventilkörper des Rückschlagventils trägt oder ausbildet. Damit kann die genannte Zwangskopplung zwischen dem Stößel und dem Ventilkörper in der Axialrichtung einfach erreicht werden. Ferner kann beim Aufpumpen des Reifens mit einem Stift eines Pumpenkopfes, der über den Ventilschaft am Lufteinlassende gestülpt wird, die Ventilstange, insbesondere entgegen der Druckkraft der Druckfeder, in Richtung zum Luftauslassende geschoben werden, um den Luftdurchgang zu öffnen.

Bevorzugt bildet die Außenhülse den Ventilsitz des Rückschlagventils aus, insbesondere mit einem dem Luftauslassende zugewandten ringförmigen, vorteilhaft kreisringförmigen, Axialvorsprung. Dadurch kann eine kompakte und einfache Ausgestaltung erreicht werden.

Der Stößel ist bevorzugt an einem axialen Ende der Ventilstange positioniert. Dadurch kann der Stößel beispielsweise im Wesentlichen oder vollständig bündig im an der Verjüngung oder am radial inneren Vorsprung anliegenden Zustand mit dem Lufteinlassende des Ventilschafts abschließen, sodass keinerlei Raum innerhalb des Ventilschafts vorhanden ist, in welchem sich Schmutz und Fremdkörper ansammeln können.

An einem dem Luftauslassende zugewandten axialen Ende der Ventilstange ist bevorzugt ein Topf angeordnet oder einteilig mit der Ventilstange ausgebildet, der einen den Ventilkörper ausbildenden Dichtring aufnimmt. Der Dichtring ist beispielsweise als Flachdichtring ausgeführt, der an dem Ventilsitz, insbesondere dem ringförmigen Axialvorsprung der Außenhülse, im geschlossenen Zustand des Rückschlagventils anliegt.

Günstig ist, wenn die Druckfeder radial außen auf dem Stößel und radial innen in der Außenhülse anliegt, um den Stößel und insbesondere das axiale Ende der Ventilstange, an dem der Stößel positioniert ist, beim Verschieben in der Axialrichtung zu führen.

Der Stößel weist zum Beispiel einen ersten Axialabschnitt und einen zweiten, sich insbesondere unmittelbar an den ersten Axialabschnitt anschließenden zweiten Axialabschnitt auf. Mit dem ersten Axialabschnitt bietet der Stößel einen äußeren Umfang, an dem die Druckfeder anliegt. Mit dem zweiten Axialabschnitt, der insbesondere einen gegenüber dem ersten Axialabschnitt vergrößerten Außendurchmesser aufweist, liegt der Stößel direkt oder über ein zwischengeordnetes Dichtelement beispielsweise einen O-Ring, an der Verjüngung oder am radial inneren Vorsprung an.

Besonders bevorzugt ist in der Außenhülse eine über einen Radialsteg mit der Außenhülse verbundene Innenhülse angeordnet, die den Luftdurchgang umschließt und ein erstes dem Lufteinlassende zugewandtes Axialende und ein zweites dem Luftauslassende zugewandtes Axialende aufweist. Die Druckfeder ist über das erste Axialende auf die Innenhülse aufgeschoben und stützt sich am Radialsteg ab. Das zweite Axialende bildet den Ventilsitz des Rückschlagventils, also den zuvor genannten ringförmigen Axialvorsprung, aus. Durch diese Gestaltung kann eine schlanke Form des Ventileinsatzes erreicht werden, bei gleichzeitig großem Strömungsquerschnitt im Luftdurchlass.

Bevorzugt erstreckt sich die Ventilstange durch die Innenhülse hindurch, sodass beispielsweise der Topf auf einer Seite, nämlich der dem Luftauslassende zugewandten Seite, der Innenhülse positioniert werden kann und auf der anderen Seite der Innenhülse, der dem Lufteinlassende zugewandten Seite, die Druckfeder und entsprechend auch der Stößel positioniert werden können.

Bevorzugt umfasst der Ventilschaft im Bereich des dem Luftauslassende zugewandten axialen Endes der Außenhülse einen Bund, an dem das dem Luftauslassende zugewandte axiale Ende der Außenhülse axial anliegt. Damit wird die Position des Ventileinsatzes im Ventilschaft genau festgelegt, axial durch den Bund und radial durch die radial innere Oberfläche des Ventilschafts, an welcher der Ventileinsatz anliegt.

Der Ventileinsatz kann unmittelbar radial innen im Ventilschaft anliegen oder über wenigstens ein zwischengeordnetes Element, beispielsweise zum Ausgleich eines Spiels oder unterschiedlicher thermischer Dehnungen. Als solches Element kommt insbesondere ein PTFE-Ring zwischen dem Ventileinsatz und dem Ventilschaft in Betracht. Ein solcher Ring kann gemäß einer Ausführungsform auch nur über einem axialen Teilabschnitt des Ventileinsatzes vorgesehen sein, während der verbleibende Axialabschnitt oder die verbleibenden Axialabschnitte des Ventileinsatzes unmittelbar am Ventilschaft anliegen.

Der radial innere Vorsprung kann bevorzugt durch Umbiegen, insbesondere Bördeln des Lufteinlassendes des Ventilschafts hergestellt werden. Jedoch kommen auch andere Herstellungsverfahren durch Umformen und/oder mechanische Bearbeitung in Betracht, beispielsweise durch Stauchen und/oder Heißumformen.

Die Außenhülse kann Radialöffnungen, insbesondere an dem Lufteinlassende zugewandten axialen Ende randoffene Ausbrüche umfassen, um den Strömungsquerschnitt des Luftdurchgangs zu vergrößern.

Ein erfindungsgemäßer Ventileinsatz für ein Reifenventil weist eine Außenhülse auf, die einen Luftdurchgang umschließt und in der ein Rückschlagventil mit einem Ventilkörper und einem Ventilsitz im Luftdurchgang angeordnet ist.

Der Ventileinsatz weist ferner eine Ventilstange auf, die den Ventilkörper trägt oder ausbildet und in Axialrichtung verschiebbar in der Außenhülse gelagert ist.

Auf der Ventilstange ist zusätzlich zu dem Ventilkörper ein Stößel angeordnet oder wird einteilig mit dieser ausgebildet, der zumindest bezüglich einer Verschiebung in der Axialrichtung aus der Außenhülse heraus starr an die Ventilstange gekoppelt ist. Bevorzugt ist der Stößel in der Axialrichtung aus der Außenhülse heraus federbeaufschlagt, wobei eine gemeinsame Feder zum Federbeaufschlagen des Stößels und des Ventilkörpers des Rückschlagventils vorgesehen werden kann.

Der erfindungsgemäße Ventileinsatz kann insbesondere als vormontierte Baugruppe in einen Ventilschaft eines Reifenventils eingesetzt werden.

Der Ventileinsatz für ein erfindungsgemäßes Reifenventil kann beispielsweise durch Vormontieren von zwei Baugruppen hergestellt werden. Die erste Baugruppe umfasst den Stößel und gegebenenfalls ein Dichtelement. Die zweite Baugruppe umfasst die Druckfeder, die Ventilstange, den Ventilkörper, insbesondere in Form des Dichtringes und gegebenenfalls den Topf. Zur Vormontage der zweiten Baugruppe wird der Ventilkörper, insbesondere der Dichtring mit dem Topf auf die Ventilstange geschoben. Anschließend (oder auch zuvor oder gleichzeitig) kann die Ventilstange in die Außenhülse, insbesondere in die in der Außenhülse vorgesehene Innenhülse eingeschoben werden und die Ventilfeder auf der entgegengesetzten Seite zu dem Ventilkörper auf die Ventilstange geschoben werden. Anschließend kann der Stößel auf der entgegengesetzten Seite wie der Ventilkörper auf der Ventilstange montiert werden, beispielsweise durch verpressen. Dies kann derart erfolgen, dass ein fester vorgegebener Abstand zwischen dem Stößel und der Außenhülse nicht unterschritten beziehungsweise genau eingestellt wird. Ein solcher Abstand beträgt vorzugsweise wenigstens 2 mm oder wenigstens 3 mm.

Gemäß einer Ausführungsform der Erfindung ist am Stößel ein Dichtelement vorgesehen, das vergleichsweise weicher als ein den Ventilkörper ausbildender Dichtring ist. Damit kann ein besonders guter Toleranzausgleich im Bereich des Lufteinlassendes zwischen dem Stößel und dem radial inneren Vorsprung erreicht werden.

Dadurch, dass das erfindungsgemäße Reifenventil im Bereich des Luftdurchgangs beziehungsweise radial innen im Ventilschaft bevorzugt ohne Innengewinde auskommt, besteht keine Gefahr, dass beim Einschrauben des Ventileinsatzes in den Ventilschaft Späne entstehen, die das Rückschlagventil schädigen können.

Aufgrund dessen, dass das erfindungsgemäße Reifenventil ohne Ventilkappe auskommen kann, besteht nicht die Gefahr, dass eine solche Ventilkappe verlorengeht und dabei in die Umwelt gelangt.

Der erfindungsgemäße Ventileinsatz weist bevorzugt einen solchen Außendurchmesser auf, dass er in alle gängigen Ventilschäfte mit einem Außendurchmesser von in der Regel 8 mm eingesetzt werden kann, die in Felgenbohrungen mit einem Durchmesser von 8,5 mm eingesetzt werden.

Gemäß einer abgewandelten Ausführungsform eines erfindungsgemäßen Reifenventils, das einen Ventilschaft und einen erfindungsgemäßen Ventileinsatz aufweist, der in den Ventilschaft eingesetzt ist, ist kein radial innerer Vorsprung oder eine Verjüngung am Lufteinlassende des Ventilschafts erforderlich, an der beziehungsweise an dem der Stößel federvorgespannt anliegt. Vielmehr kann bei einer starren Kopplung zwischen der Ventilstange und dem Stößel zumindest bezüglich einer Verschiebung des Stößels in der Axialrichtung gesehen vom Luftauslassende zum Lufteinlassende des Luftdurchgangs der Stößel auch einen ersten Radialspalt mit dem Ventilschaft ausbilden oder radial innen am Ventilschaft anliegen, wenn sich der Stößel in einer ersten Axialposition im Lufteinlassende des Ventilschafts befindet, aus der er entgegen einer Federkraft in Richtung des Luftauslassendes in eine zweite Axialposition verschiebbar ist, in welcher er einen zweiten Radialspalt mit dem Ventilschaft ausbildet. Der zweite Radialspalt ist bevorzugt größer als der erste Radialspalt, um den Strömungsquerschnitt für in den Ventilschaft über das Lufteinlassende einströmende Druckluft nicht zu behindern.

Gemäß einer Ausführungsform verjüngt sich der Ventilschaft in der vom Luftauslassende zum Lufteinlassende gerichteten Axialrichtung zumindest im Bereich des Lufteinlassendes im Querschnitt des Luftdurchgangs, insbesondere konisch. Dadurch wird die gewünschte Radialspaltänderung erreicht. Jedoch kommen natürlich auch andere Gestaltungen mit einer Verjüngung am Lufteinlassende in Betracht.

Die Erfindung soll nachfolgend anhand von Ausführungsbeispielen und den Figuren exemplarisch beschrieben werden.

Es zeigen:
- Figur 1: einen Axialschnitt durch ein Ausführungsbeispiel eines erfindungsgemäßen Reifenventils;
- Figur 2: einen Axialschnitt durch ein Reifenventil gemäß einer anderen Ausführungsform der Erfindung;
- Figur 3: einen Axialschnitt durch ein äußeres Ende eines erfindungsgemäßen Reifenventils mit dem Lufteinlassende;
- Figur 4: eine hälftig geschnittene und hälftig nicht geschnittene Ansicht eines erfindungsgemäßen Ventileinsatzes für ein erfindungsgemäßes Reifenventil;
- Figur 5: eine alternative Ausführungsform eines erfindungsgemäßen Reifenventils ohne radial inneren Vorsprung;
- Figur 6: eine weitere abgewandelte Ausführungsform eines erfindungsgemäßen Reifenventils mit Verjüngung des Ventilschafts.

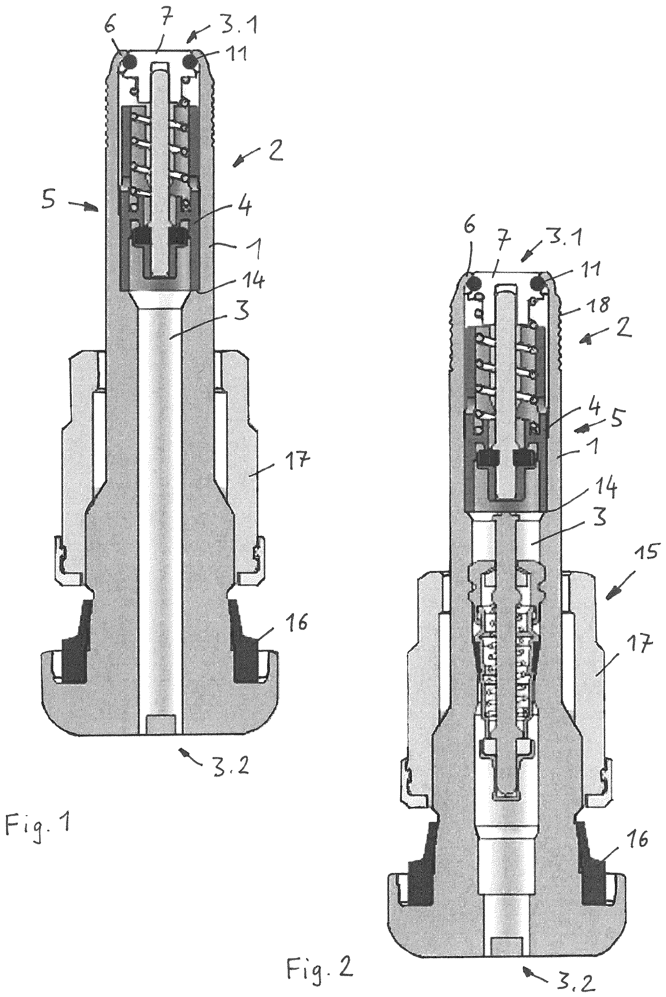

In der Figur 1 ist ein Ausführungsbeispiel eines erfindungsgemäßen Reifenventils dargestellt, das einen Ventilschaft 1 aufweist, der einen Luftdurchgang 3 in Radialrichtung umschließt, der sich von einem Lufteinlassende 3.1 an einem axialen Ende des Ventilschafts 1 bis zu einem Luftauslassende 3.2 am entgegengesetzten axialen Ende des Ventilschafts 1 erstreckt. Der Ventilschaft 1 wird durch eine nicht näher dargestellte Felgenbohrung gesteckt und gegenüber dieser abgedichtet, sodass sich das Luftauslassende 3.2 im Felgenbett beziehungsweise innerhalb eines Reifenhohlraums befindet und das Lufteinlassende 3.1 außerhalb des Reifenhohlraums positioniert ist. Zum Abdichten des Ventilschafts 1 an der Felge ist eine Dichtung 16 auf dem Ventilschaft 1 im Bereich des Luftauslassendes 3.2 vorgesehen. Der Ventilschaft 1 wird gegen die Felge mittels einer aufgeschraubten Überwurfmutter 17 derart verspannt, dass die Dichtung 16 abdichtend in die Laibung der Felgenbohrung gedrückt wird.

In einem vorderen Abschnitt des Ventilschafts 1, an dem das Lufteinlassende 3.1 vorgesehen ist, ist über das Lufteinlassende 3.1 ein Ventileinsatz 2 derart in den Luftdurchgang 3 eingesetzt worden, dass der Ventileinsatz 2 einen Abschnitt des Luftdurchgangs 3 ausbildet. Der Ventileinsatz 2 ist entsprechend gegen den Ventilschaft 1 abgedichtet und umschließt den Luftdurchgang 3.

Nach dem Einsetzen des Ventileinsatzes 2 in den Luftdurchgang 3 ist der Luftdurchgang 3 im Bereich des Lufteinlassendes 3.1 verjüngt worden, indem am Lufteinlassende 3.1 ein radial innerer Vorsprung 6 des Ventilschafts 1 ausgebildet worden ist. Dies ist beispielsweise durch Umbördeln des Materials des Ventilschafts 1 am Lufteinlassende 3.1 erreicht worden.

Das Ausführungsbeispiel gemäß der Figur 2 unterscheidet sich von jenem der Figur 1 dadurch, dass im Luftdurchgang 3 zwischen dem Luftauslassende 3.2 und dem Ventileinsatz 2 ein weiteres Ventil 15 mit einem eigenen Ventileinsatz eingesetzt worden ist, um eine zusätzliche Sicherheit bei der Abdichtung des Luftdurchgangs 3 zu erreichen.

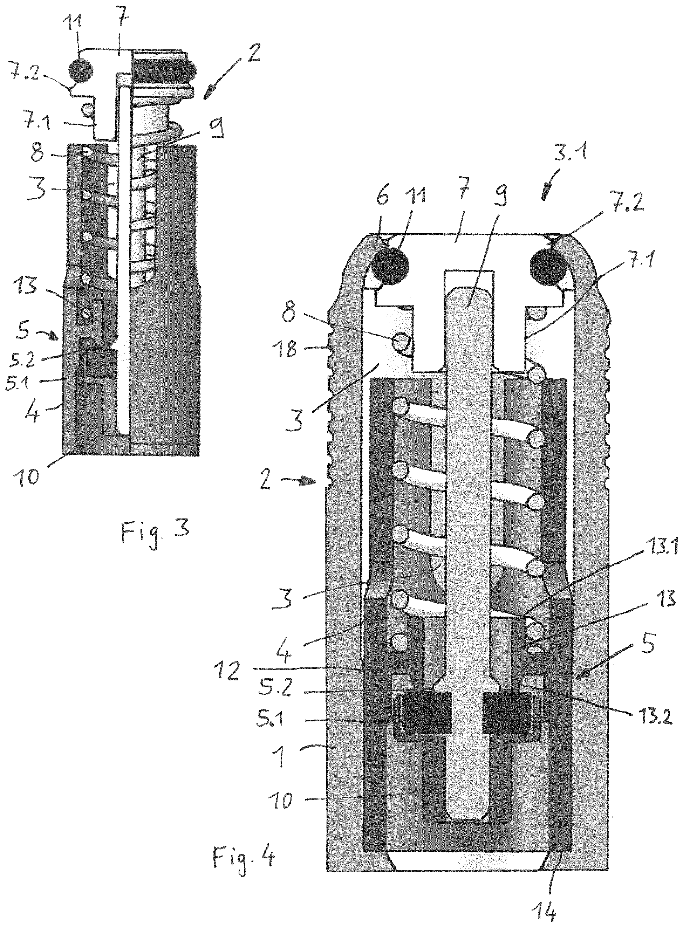

Eine vorteilhafte Gestaltung eines erfindungsgemäßen Ventileinsatzes 2, wie er zum Beispiel in den Reifenventilen gemäß den Figuren 1 und 2 verwendet wird, wird besonders aus den Darstellungen in den Figuren 3 und 4 ersichtlich. So weist der Ventileinsatz 2 eine Außenhülse 4 auf, die den Luftdurchgang 3 radial außen umschließt. In der Außenhülse 4 ist ein Rückschlagventil 5 vorgesehen, das einen Ventilkörper 5.1 und einen Ventilsitz 5.2 umfasst.

Der Ventilkörper 5.1 ist im gezeigten Ausführungsbeispiel, jedoch nicht zwingend, als Dichtring ausgeführt, der in einen Topf 10 eingesetzt ist, der am luftauslassendseitigen Axialende einer Ventilstange 9 befestigt ist. Am entgegengesetzten Axialende der Ventilstange 9 ist ein Stößel 7, der auf seinem radial äußeren Umfang ein Dichtelement 11, beispielsweise einen O-Ring, trägt, befestigt. Beispielsweise ist die Ventilstange 9 in eine Axialbohrung im Stößel 7 und/oder in einer Axialbohrung im Topf 10 eingepresst.

Die Ventilstange 9 wird von einer Druckfeder 8 umschlossen, die sich einerseits axial am Stößel 7 abstützt und diesen mit dem Dichtelement 11 axial von innen gegen den radial inneren Vorsprung 6 des Ventilschafts 1 drückt und sich andererseits axial an der Außenhülse 4 abstützt. Die Druckfeder 8 liegt sowohl radial innen an einer radial inneren Oberfläche der Außenhülse 4 an als auch auf einer radial äußeren Oberfläche des Stößels 7. Diese radial äußere Oberfläche des Stößels 7 wird durch einen ersten Axialabschnitt 7.1 gebildet, an den sich in Axialrichtung ein zweiter Axialabschnitt 7.2 anschließt, der einen vergleichsweise größeren Durchmesser aufweist und das Dichtelement 11 trägt.

Die Außenhülse 4 umschließt eine Innenhülse 13, die über einen Radialsteg 12 an der Außenhülse 4 angeschlossen ist. Bevorzugt sind die Innenhülse 13, der Radialsteg 12 und die Außenhülse 4 einteilig hergestellt.

Der Radialsteg 12 bildet eine axiale Anschlagfläche, an welcher sich die Druckfeder 8 abstützt.

Die Innenhülse 13 weist ein erstes Axialende 13.1 auf, das dem Lufteinlassende 3.1 zugewandt ist und über welches das axiale Ende der Druckfeder 8 übergeschoben ist. Die Innenhülse 13 weist ferner ein zweites Axialende 13.2 auf, das den ringförmigen, bevorzugt kreisringförmigen, Ventilsitz 5.2 ausbildet.

Die Außenhülse 4.1 liegt in Richtung auf das Luftauslassende 3.2 gesehen an einem Bund 14 axial an. Aufgrund der Federkraft der Druckfeder 8 und aufgrund der Abstützung der Druckfeder 8 über den Stößel 7 am radial inneren Vorsprung 6 des Ventilschafts 1 und an der Außenhülse 4 wird die Außenhülse 4 federelastisch gegen den Bund 14 gepresst. Dadurch kann eine zusätzliche Sicherheit gegen Verschieben der Außenhülse 4 innerhalb des Ventilschafts 1 erreicht werden, in Ergänzung zu einer kraftschlüssigen Verbindung durch Verpressen zwischen der Außenhülse 4 und dem Ventilschaft 1.

Im Bereich des Lufteinlassendes 3.1 weist der Ventilschaft 1 bevorzugt eine Riffelung 18 auf, um beim Aufstecken eines Pumpenkopfes (auch Fülladapter genannt) diesen sicher auf dem Ventilschaft 1 zu halten.

Obwohl vorliegend der radial innere Vorsprung 6 einteilig mit dem Ventilschaft 1 ausgeführt ist, kann prinzipiell dieser radial innere Vorsprung 6 durch ein im Bereich des Lufteinlassendes 3.1 am Ventilschaft 1 befestigtes separates Bauteil gebildet werden.

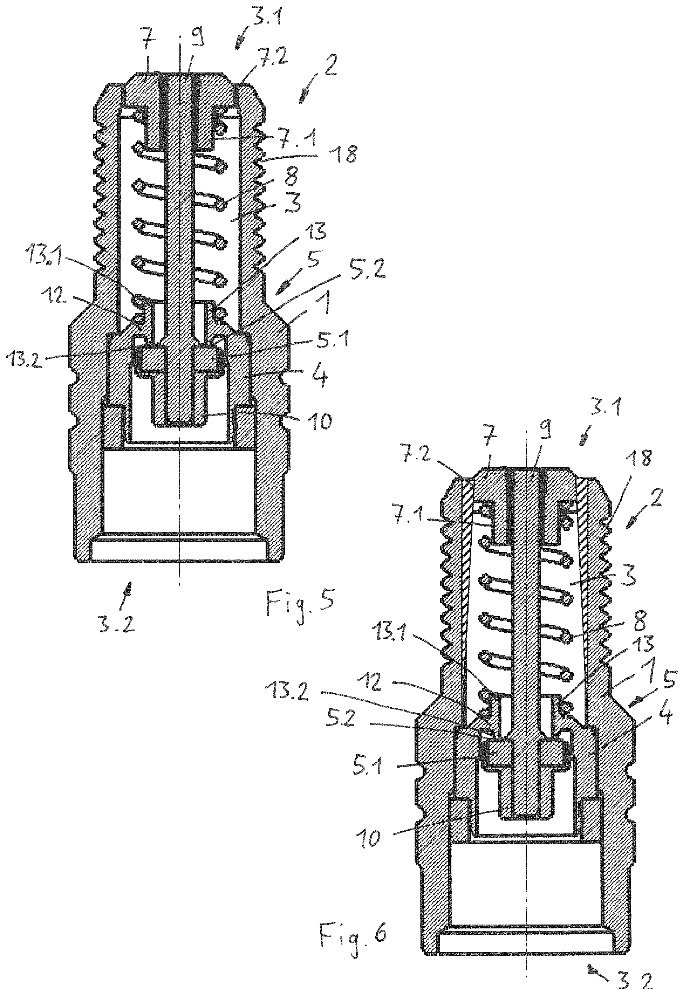

In der Figur 5 ist ein weiteres Ausführungsbeispiel eines erfindungsgemäßen Reifenventils dargestellt, bei welchem der Stößel 7 starr auf der Ventilstange 9 befestigt ist. Wenn das Rückschlagventil 5 aufgrund der Federkraft der Druckfeder 8 schließt, wird zugleich der Stößel 7 in einer ersten Axialposition im Lufteinlassende 3.1 des Ventilschafts positioniert. Zum Aufpumpen eines entsprechenden Reifens wird mit einem Pumpenkopf oder Fülladapter die Ventilstange 9 in Richtung zum Luftauslassende 3.2 des Luftdurchgangs 3 verschoben und damit wird der Stößel 7 aus der ersten Axialposition entgegen der Federkraft der Druckfeder 8 in eine zweite Axialposition verschoben, in welcher er einen zweiten Radialspalt mit dem Ventilschaft 1 als Strömungsquerschnitt für den Luftdurchgang 3 ausbildet. Dieser zweite Radialspalt ist größer als ein erster Radialspalt zwischen dem Stößel 7 und dem Ventilschaft 1 in der ersten Axialposition des Stößels 7, wobei dieser erste Radialspalt auch ein Nullspalt sein kann, das heißt, dass der Stößel 7 zumindest im Wesentlichen radial innen am Ventilschaft 1 anliegt.

Wie aus der Figur 5 ersichtlich ist, kann dies durch eine Verjüngung des Ventilschafts 1 am Lufteinlassende 3.1 erreicht werden. Die Verjüngung ist allerdings derart ausgebildet, dass kein axiales Anschlagen des Stößels 7 an der Verjüngung erfolgt.

Die Ausführungsform gemäß der Figur 6 unterscheidet sich dadurch von jener der Figur 5, dass der Ventilschaft 1 im Bereich des Lufteinlassendes 3.1 konisch verjüngt ist. Auch hier erfolgt kein Anschlagen des Stößels 7 in der Axialrichtung am Ventilschaft 1. Im Übrigen wird auf die Beschreibung der Figur 5 verwiesen, wobei bei den Ausführungsformen, die in den Figuren 5 und 6 dargestellt sind, dieselben Bezugszeichen für die sich entsprechenden Bauteile wie in den Figur 1 bis 4 verwendet werden.

Die Erfindung ist bei Ventilschäften aus jeglichem Material anwendbar, insbesondere bei Ventilschäften aus Metall. Auch der Ventileinsatz, das heißt die Außenhülse, die Innenhülse, der Radialsteg, die Druckfeder, die Ventilstange, der Stößel und/oder der Topf, ist bevorzugt, jedoch nicht zwingend, aus Metall hergestellt.

### Bezugszeichenliste

- 1: Ventilschaft
- 2: Ventileinsatz
- 3: Luftdurchgang
- 3.1: Lufteinlassende
- 3.2: Luftauslassende
- 4: Außenhülse
- 5: Rückschlagventil
- 5.1: Ventilkörper
- 5.2: Ventilsitz
- 6: Vorsprung
- 7: Stößel
- 7.1: erster Axialabschnitt
- 7.2: zweiter Axialabschnitt
- 8: Druckfeder
- 9: Ventilstange
- 10: Topf
- 11: Dichtelement
- 12: Radialsteg
- 13: Innenhülse
- 13.1: erstes Axialende
- 13.2: zweites Axialende
- 14: Bund
- 15: Ventil
- 16: Dichtung
- 17: Überwurfmutter
- 18: Riffelung

## Patentansprüche

1. Reifenventil mit einem Ventilschaft (1) und einem in den Ventilschaft (1) eingesetzten Ventileinsatz (2), wobei der Ventilschaft (1) und der Ventileinsatz (2) einen Luftdurchgang (3) umschließen, der sich in einer Axialrichtung von einem Lufteinlassende (3.1) an einem ersten axialen Ende des Ventilschafts (1) zu einem Luftauslassende (3.2) an einem zweiten axialen Ende des Ventilschafts (1) erstreckt; und
der Ventileinsatz (2) eine Außenhülse (4) umfasst, die den Luftdurchgang (3) umschließt und in der ein Rückschlagventil (5) mit einem Ventilkörper (5.1) und einem Ventilsitz (5.2) im Luftdurchgang (3) angeordnet ist; wobei der Ventilschaft (1) einteilig ausgeführt ist und der Ventileinsatz (2) vollständig innerhalb des einteiligen Ventilschafts (1) angeordnet ist und von diesem vollumfänglich umschlossen wird;
**dadurch gekennzeichnet, dass**
der Ventilschaft (1) am Lufteinlassende (3.1) eine Verjüngung und/oder einen radial inneren Vorsprung (6) aufweist, an der/dem ein im Luftdurchgang (3) zusätzlich zu dem Rückschlagventil (5) angeordneter Stößel (7) federvorgespannt anliegt.

2. Reifenventil gemäß Anspruch 1, **dadurch gekennzeichnet, dass** der Vorsprung (6) oder die Verjüngung durch Umformen, insbesondere Umbiegen radial nach innen, des Lufteinlassendes (3.1) des Ventilschafts (1) hergestellt ist.

3. Reifenventil gemäß einem der Ansprüche 1 oder 2, **dadurch gekennzeichnet, dass** der Stößel (7) und der Ventilkörper (5.1) bezüglich einer Bewegung in der Axialrichtung zwangsgekoppelt sind, insbesondere starr aneinander angeschlossen sind.

4. Reifenventil gemäß einem der Ansprüche 1 bis 3, **dadurch gekennzeichnet, dass** auf oder in der Außenhülse (4) eine Druckfeder (8) angeordnet ist, die einerseits den Stößel (7) in Richtung des Lufteinlassendes (3.1) druckbeaufschlagt und sich andererseits in Richtung des Luftauslassendes (3.2) an der Außenhülse (4) abstützt.

5. Reifenventil gemäß Anspruch 4, **dadurch gekennzeichnet, dass** der Ventilschaft (1) im Bereich des dem Luftauslassende (3.2) zugewandten axialen Endes der Außenhülse (4) einen Bund (14) aufweist, an dem das dem Luftauslassende (3.2) zugewandte axiale Ende der Außenhülse (4) axial anliegt und die Druckfeder (8) die Außenhülse (4) gegen den Bund (14) drückt.

6. Reifenventil gemäß einem der Ansprüche 1 bis 5, **dadurch gekennzeichnet, dass** der Stößel (7) auf einer Ventilstange (9), insbesondere kraft- und/oder formschlüssig, angeordnet ist oder einteilig mit dieser ausgebildet ist, die auch den Ventilkörper (5.1) des Rückschlagventils (5) trägt oder einteilig ausbildet, wobei der Stößel (7) insbesondere an einem axialen Ende der Ventilstange (9) positioniert ist, insbesondere aufgepresst ist.

7. Reifenventil gemäß Anspruch 6, **dadurch gekennzeichnet, dass** an einem dem Luftauslassende (3.2) zugewandten axialen Ende der Ventilstange (9) ein Topf (10) angeordnet oder einteilig mit der Ventilstange (9) ausgebildet ist, der einen den Ventilkörper (5.1) ausbildenden Dichtring aufnimmt.

8. Reifenventil gemäß einem der Ansprüche 1 bis 7, **dadurch gekennzeichnet, dass** die Außenhülse (4) den Ventilsitz (5.2) des Rückschlagventils (5) ausbildet, insbesondere mit einem dem Luftauslassende (3.2) zugewandten ringförmigen Axialvorsprung.

9. Reifenventil gemäß einem der Ansprüche 4 oder 5, oder gemäß wenigstens einem der Ansprüche 6 bis 8, wenn dieser auf den Anspruch 4 oder 5 rückbezogen ist, **dadurch gekennzeichnet, dass** die Druckfeder (8) radial außen auf dem Stößel (7) und radial innen in der Außenhülse (4) anliegt, um den Stößel (7) und insbesondere das axiale Ende der Ventilstange (9), an dem der Stößel (7) positioniert ist, beim Verschieben in der Axialrichtung zu führen.

10. Reifenventil gemäß Anspruch 9, **dadurch gekennzeichnet, dass** der Stößel (7) einen ersten Axialabschnitt (7.1) aufweist, an dem die Druckfeder (8) anliegt, und einen zweiten Axialabschnitt (7.2) aufweist, insbesondere mit gegenüber dem ersten Axialabschnitt (7.1) vergrößertem Außendurchmesser, mit dem er direkt oder über ein zwischengeordnetes Dichtelement (11) an der Verjüngung oder am radial inneren Vorsprung (6) anliegt.

11. Reifenventil gemäß einem der Ansprüche 4 oder 5, oder gemäß wenigstens einem der Ansprüche 6 bis 10, wenn dieser auf den Anspruch 4 oder 5 rückbezogen ist, **dadurch gekennzeichnet, dass** in der Außenhülse (4) eine über einen Radialsteg (12) mit der Außenhülse (4) verbundene Innenhülse (13) angeordnet ist, die den Luftdurchgang (3) umschließt und ein erstes dem Lufteinlassende (3.1) zugewandtes Axialende (13.1) und ein zweites dem Luftauslassende (3.2) zugewandtes Axialende (13.2) aufweist, wobei die Druckfeder (8) über das erste Axialende (13.1) auf die Innenhülse (13) geschoben ist und sich am Radialsteg (12) abstützt, und das zweite Axialende (13.2) den Ventilsitz (5.2) des Rückschlagventils (5) ausbildet.

12. Reifenventil gemäß einem der Ansprüche 1 bis 11, **dadurch gekennzeichnet, dass** der Ventileinsatz (2) gewindefrei im Ventilschaft (1) eingesetzt, insbesondere eingepresst ist.

13. Reifenventil gemäß einem der Ansprüche 1 bis 12, **dadurch gekennzeichnet, dass** der Ventilschaft (1) im Bereich des dem Luftauslassende (3.2) zugewandten axialen Endes der Außenhülse (4) einen Bund (14) aufweist, an dem das dem Luftauslassende (3.2) zugewandte axiale Ende der Außenhülse (4) axial anliegt.

14. Reifenventil gemäß einem der Ansprüche 1 bis 13, **dadurch gekennzeichnet, dass** der Ventilschaft (1) zumindest in einem Bereich eines axialen Abschnitts, in dem der Ventileinsatz (2) angeordnet ist, gewindefrei ist.

15. Reifenventil gemäß einem der Ansprüche 1 bis 14, **dadurch gekennzeichnet, dass** das Reifenventil ventilkappenfrei ist.

16. Reifenventil gemäß einem der Ansprüche 1 bis 15, **dadurch gekennzeichnet, dass** im Luftdurchgang (3) in Reihe zu dem Ventileinsatz (2) zwischen dem Ventileinsatz (2) und dem Luftauslassende (3.2) wenigstens eine weiteres den Luftdurchgang (3) versperrendes Ventil (15) vorgesehen ist.

17. Reifenventil mit einem Ventilschaft (1) und einem in den Ventilschaft (1) eingesetzten Ventileinsatz (2), wobei der Ventilschaft (1) und der Ventileinsatz (2) einen Luftdurchgang (3) umschließen, der sich in einer Axialrichtung von einem Lufteinlassende (3.1) an einem ersten axialen Ende des Ventilschafts (1) zu einem Luftauslassende (3.2) an einem zweiten axialen Ende des Ventilschafts (1) erstreckt; und
der Ventileinsatz (2) eine Außenhülse (4) umfasst, die den Luftdurchgang (3) umschließt und in der ein Rückschlagventil (5) mit einem Ventilkörper (5.1) und einem Ventilsitz (5.2) im Luftdurchgang (3) angeordnet ist; wobei der Ventilschaft (1) einteilig ausgeführt ist und der Ventileinsatz (2) vollständig innerhalb des einteiligen Ventilschafts (1) angeordnet ist und von diesem vollumfänglich umschlossen wird;
mit einer Ventilstange (9), die den Ventilkörper (5.1) trägt oder ausbildet und in Axialrichtung verschiebbar in der Außenhülse (4) gelagert ist;
auf der Ventilstange (9) zusätzlich zu dem Ventilkörper (5.1) ein Stößel (7) angeordnet oder einteilig mit dieser ausgebildet ist, der zumindest bezüglich einer Verschiebung in Axialrichtung aus der Außenhülse (4) heraus starr an die Ventilstange (9) gekoppelt ist;
**dadurch gekennzeichnet, dass**
der Stößel (7) einen ersten Radialspalt mit dem Ventilschaft (1) ausbildet oder, um einen ersten Radialspalt als Nullspalt auszubilden, radial innen am Ventilschaft (1) anliegt, wenn sich der Stößel (7) in einer ersten Axialposition im Lufteinlassende (3.1) des Ventilschafts (1) befindet, aus der er entgegen einer Federkraft in Richtung des Luftauslassendes (3.2) in eine zweite Axialposition verschiebbar ist, in welcher er einen zweiten Radialspalt mit dem Ventilschaft (1) ausbildet, wobei der zweite Radialspalt größer als der erste Radialspalt ist.

## Claims

1. Tire valve having a valve stem (1) and a valve insert (2) inserted into the valve stem (1), wherein the valve stem (1) and the valve insert (2) surround an air passage (3), which extends in an axial direction from an air inlet end (3.1) at a first axial end of the valve stem (1) to an air outlet end (3.2) at a second axial end of the valve stem (1); and
the valve insert (2) comprises an outer sleeve (4), which surrounds the air passage (3) and in which a check valve (5) having a valve body (5.1) and a valve seat (5.2) is arranged in the air passage (3); wherein the valve stem (1) is embodied in one piece and the valve insert (2) is arranged completely inside the one-piece valve stem (1) and is surrounded thereby around its entire circumference;
**characterized in that**
the valve stem (1) has a taper and/or a radially interior projection (6) at the air inlet end (3.1), against which a plunger (7) arranged in the air passage (3) in addition to the check valve (5) bears in a spring-loaded manner.

2. Tire valve as claimed in claim 1, **characterized in that** the projection (6) or the taper is produced by forming, in particular bending over radially inward, the air inlet end (3.1) of the valve stem (1).

3. Tire valve as claimed in either one of claims 1 or 2, **characterized in that** the plunger (7) and the valve body (5.1) are force-coupled with respect to a movement in the axial direction, in particular are rigidly connected to one another.

4. Tire valve as claimed in any one of claims 1 to 3, **characterized in that** a compression spring (8) is arranged on or in the outer sleeve (4) which, on the one hand, applies pressure to the plunger (7) in the direction of the air inlet end (3.1) and, on the other hand, is supported in the direction of the air outlet end (3.2) on the outer sleeve (4).

5. Tire valve as claimed in claim 4, **characterized in that** the valve stem (1) has a shoulder (14) in the area of the axial end of the outer sleeve (4) facing toward the air outlet end (3.2), against which the axial end of the outer sleeve (4) facing toward the air outlet end (3.2) bears axially and the compression spring (8) presses the outer sleeve (4) against the shoulder (14).

6. Tire valve as claimed in any one of claims 1 to 5, **characterized in that** the plunger (7) is arranged, in particular in a friction-locked and/or formfitting manner, on a valve rod (9) or is formed in one piece therewith, which valve rod also carries the valve body (5.1) of the check valve (5) or forms it in one piece, wherein the plunger (7) is in particular positioned at an axial end of the valve rod (9), in particular pressed on.

7. Tire valve as claimed in claim 6, **characterized in that**, at an axial end of the valve rod (9) facing toward the air outlet end (3.2), a cup (10), which receives a sealing ring forming the valve body (5.1), is arranged or is formed in one piece with the valve rod (9).

8. Tire valve as claimed in any one of claims 1 to 7, **characterized in that** the outer sleeve (4) forms the valve seat (5.2) of the check valve (5), in particular with an annular axial projection facing toward the air outlet end (3.2).

9. Tire valve as claimed in either one of claims 4 or 5, or as claimed in at least one of claims 6 to 8, when this refers to claim 4 or 5, **characterized in that** the compression spring (8) bears on the radial outside on the plunger (7) and on the radial inside in the outer sleeve (4), in order to guide the plunger (7) and in particular the axial end of the valve rod (9), on which the plunger (7) is positioned, during the displacement in the axial direction.

10. Tire valve as claimed in claim 9, **characterized in that** the plunger (7) has a first axial section (7.1), on which the compression spring (8) bears, and has a second axial section (7.2), in particular having an external diameter enlarged in relation to the first axial section (7.1), using which it bears directly or via an interposed seal element (11) on the taper or on the radially interior projection (6).

11. Tire valve as claimed in either one of claims 4 or 5, or as claimed in at least one of claims 6 to 10, when this refers to claim 4 or 5, **characterized in that** an inner sleeve (13) connected via a radial web (12) to the outer sleeve (4) is arranged in the outer sleeve (4), which inner sleeve surrounds the air passage (3) and has a first axial end (13.1) facing toward the air inlet end (3.1) and a second axial end (13.2) facing toward the air outlet end (3.2), wherein the compression spring (8) is pushed over the first axial end (13.1) onto the inner sleeve (13) and is supported on the radial web (12), and the second axial end (13.2) forms the valve seat (5.2) of the check valve (5).

12. Tire valve as claimed in any one of claims 1 to 11, **characterized in that** the valve insert (2) is inserted without thread into the valve stem (1), in particular is pressed in.

13. Tire valve as claimed in any one of claims 1 to 12, **characterized in that** the valve stem (1) has a shoulder (14) in the area of the axial end of the outer sleeve (4) facing toward the air outlet end (3.2), against which the axial end of the outer sleeve (4) facing toward the air outlet end (3.2) bears axially.

14. Tire valve as claimed in any one of claims 1 to 13, **characterized in that** the valve stem (1) is thread-free at least in an area of the axial section in which the valve insert (2) is arranged.

15. Tire valve as claimed in any one of claims 1 to 14, **characterized in that** the tire valve is valve cap-free.

16. Tire valve as claimed in any one of claims 1 to 15, **characterized in that** at least one further valve (15) blocking the air passage (3) is provided in the air passage (3) in series with the valve insert (2) between the valve insert (2) and the air outlet end (3.2).

17. Tire valve having a valve stem (1) and a valve insert (2) inserted into the valve stem (1), wherein the valve stem (1) and the valve insert (2) surround an air passage (3), which extends in an axial direction from an air inlet end (3.1) at a first axial end of the valve stem (1) to an air outlet end (3.2) at a second axial end of the valve stem (1); and
the valve insert (2) comprises an outer sleeve (4), which surrounds the air passage (3) and in which a check valve (5) having a valve body (5.1) and a valve seat (5.2) is arranged in the air passage (3); wherein the valve stem (1) is embodied in one piece and the valve insert (2) is arranged completely inside the one-piece valve stem (1) and is surrounded thereby around its entire circumference;
having a valve rod (9) which carries or forms the valve body (5.1) and is mounted in the outer sleeve (4) so it is displaceable in the axial direction;
a plunger (7) is arranged on the valve rod (9) in addition to the valve body (5.1) or is formed in one piece therewith, which plunger is rigidly coupled to the valve rod (9) at least with respect to a displacement in the axial direction out of the outer sleeve (4);
**characterized in that**
the plunger (7) forms a first radial gap with the valve stem (1) or, in order to form a first radial gap as a zero gap, bears on the radial inside on the valve stem (1) when the plunger (7) is in a first axial position in the air inlet end (3.1) of the valve stem (1), out of which it is displaceable against a spring force in the direction of the air outlet end (3.2) into a second axial position, in which it forms a second radial gap with the valve stem (1), wherein the second radial gap is larger than the first radial gap.

## Revendications

1. Valve de pneumatique avec une tige de soupape (1) et une garniture de soupape (2) insérée dans la tige de soupape (1), dans laquelle la tige de soupape (1) et la garniture de soupape (2) entourent un passage d'air (3) qui s'étend dans un sens axial d'une extrémité d'entrée d'air (3.1), située à une première extrémité axiale de la tige de soupape (1), à une extrémité de sortie d'air (3.2), située à une deuxième extrémité axiale de la tige de soupape (1), et la garniture de soupape (2) comprend une enveloppe extérieure (4) qui entoure le passage d'air (3) et dans laquelle une soupape antiretour (5) avec un corps de soupape (5.1) et un siège de soupape (5.2) est disposée dans le passage d'air (3), la tige de soupape (1) étant réalisée d'une pièce et la garniture de soupape (2) étant entièrement disposée à l'intérieur de la tige de soupape (1) d'une pièce et entièrement entourée par celle-ci, **caractérisée en ce que** la tige de soupape (1) présente à l'extrémité d'entrée d'air (3.1) un resserrement et/ou une saillie (6) intérieure dans le sens radial, sur lequel/laquelle repose un poussoir (7) précontraint par ressort qui est disposé dans le passage d'air (3) en plus de la soupape antiretour (5).

2. Valve de pneumatique selon la revendication 1, **caractérisée en ce que** la saillie (6) ou le resserrement est produit par formage, en particulier par pliage radial vers l'intérieur, de l'extrémité d'entrée d'air (3.1) de la tige de soupape (1).

3. Valve de pneumatique selon l'une des revendications 1 ou 2, **caractérisée en ce que** le poussoir (7) et le corps de soupape (5.1) sont couplés en force en vue d'un mouvement dans le sens axial, en particulier raccordés l'un à l'autre de manière rigide.

4. Valve de pneumatique selon l'une des revendications 1 à 3, **caractérisée en ce qu'**est disposé sur ou dans l'enveloppe extérieure (4) un ressort de compression (8) qui exerce une pression sur le poussoir (7) en direction de l'extrémité d'entrée d'air (3.1), d'une part, et s'appuie, d'autre part, sur l'enveloppe extérieure (4) en direction de l'extrémité de sortie d'air (3.2).

5. Valve de pneumatique selon la revendication 4, **caractérisée en ce que** la tige de soupape (1) présente au niveau de l'extrémité axiale de l'enveloppe extérieure (4) tournée vers l'extrémité de sortie d'air (3.2) un collet (14) sur lequel l'extrémité axiale de l'enveloppe extérieure (4) tournée vers l'extrémité de sortie d'air (3.2) repose dans le sens axial et le ressort de compression (8) presse l'enveloppe extérieure (4) contre le collet (14).

6. Valve de pneumatique selon l'une des revendications 1 à 5, **caractérisée en ce que** le poussoir (7) est disposé sur une queue de soupape (9), en particulier par engagement par friction et/ou par correspondance de forme, ou est formé d'un seul tenant avec celle-ci, qui porte aussi ou forme d'un seul tenant le corps de soupape (5.1) de la soupape antiretour (5), le poussoir (7) étant en particulier positionné, en particulier pressé, sur une extrémité axiale de la queue de soupape (9).

7. Valve de pneumatique selon la revendication 6, **caractérisée en ce qu'**est disposé ou formé d'un seul tenant avec la queue de soupape (9), à une extrémité axiale de la queue de soupape (9) tournée vers l'extrémité de sortie d'air (3.2), un godet (10) qui reçoit un joint d'étanchéité formant le corps de soupape (5.1).

8. Valve de pneumatique selon l'une des revendications 1 à 7, **caractérisée en ce que** l'enveloppe extérieure (4) forme le siège de soupape (5.2) de la soupape antiretour (5), en particulier avec une saillie axiale annulaire tournée vers l'extrémité de sortie d'air (3.2).

9. Valve de pneumatique selon l'une des revendications 4 ou 5 ou selon au moins une des revendications 6 à 8 si celle-ci fait référence à la revendication 4 ou 5, **caractérisée en ce que** le ressort de compression (8) repose à l'extérieur dans le sens radial sur le poussoir (7) et à l'intérieur dans le sens radial dans l'enveloppe extérieure (4) afin de guider le poussoir (7) et en particulier l'extrémité axiale de la queue de soupape (9), sur laquelle le poussoir (7) est positionné, lors de la translation dans le sens axial.

10. Valve de pneumatique selon la revendication 9, **caractérisée en ce que** le poussoir (7) comporte une première partie axiale (7.1) sur laquelle le ressort de compression (8) repose et une deuxième partie axiale (7.2), ayant en particulier un diamètre extérieur agrandi par rapport à la première partie axiale (7.1), avec laquelle il repose, directement ou par l'intermédiaire d'un élément d'étanchéité (11) intercalé, sur le resserrement ou sur la saillie (6) intérieure dans le sens radial.

11. Valve de pneumatique selon l'une des revendications 4 ou 5 ou selon au moins une des revendications 6 à 10 si celle-ci fait référence à la revendication 4 ou 5, **caractérisée en ce qu'**est disposée dans l'enveloppe extérieure (4) une douille intérieure (13) reliée par une baguette radiale (12) à l'enveloppe extérieure (4), qui entoure le passage d'air (3) et qui présente une première extrémité axiale (13.1) tournée vers l'extrémité d'entrée d'air (3.1) et une deuxième extrémité axiale (13.2) tournée vers l'extrémité de sortie d'air (3.2), le ressort de compression (8) étant enfilé par-dessus la première extrémité axiale (13.1) sur la douille intérieure (13) et s'appuyant sur la baguette radiale (12) et la deuxième extrémité axiale (13.2) formant le siège de soupape (5.2) de la soupape antiretour (5).

12. Valve de pneumatique selon l'une des revendications 1 à 11, **caractérisée en ce que** la garniture de soupape (2) est insérée sans filetage dans la tige de soupape (1), en particulier calée à la presse.

13. Valve de pneumatique selon l'une des revendications 1 à 12, **caractérisée en ce que** la tige de soupape (1) présente, au niveau de l'extrémité axiale de l'enveloppe extérieure (4) tournée vers l'extrémité de sortie d'air (3.2), un collet (14) sur lequel l'extrémité axiale de l'enveloppe extérieure (4) tournée vers l'extrémité de sortie d'air (3.2) repose dans le sens axial.

14. Valve de pneumatique selon l'une des revendications 1 à 13, **caractérisée en ce que** la tige de soupape (1) ne comporte pas de filetage, au moins dans une zone d'une partie axiale dans laquelle la garniture de soupape (2) est disposée.

15. Valve de pneumatique selon l'une des revendications 1 à 14, **caractérisée en ce que** la valve de pneumatique ne possède pas de capuchon de valve.

16. Valve de pneumatique selon l'une des revendications 1 à 15, **caractérisée en ce qu'**au moins une autre soupape (15) barrant le passage d'air (3) est prévue dans le passage d'air (3) dans l'alignement de la garniture de soupape (2) entre la garniture de soupape (2) et l'extrémité de sortie d'air (3.2).

17. Valve de pneumatique avec une tige de soupape (1) et une garniture de soupape (2) insérée dans la tige de soupape (1), dans laquelle la tige de soupape (1) et la garniture de soupape (2) entourent un passage d'air (3) qui s'étend dans un sens axial d'une extrémité d'entrée d'air (3.1), située à une première extrémité axiale de la tige de soupape (1), à une extrémité de sortie d'air (3.2), située à une deuxième extrémité axiale de la tige de soupape (1), et la garniture de soupape (2) comprend une enveloppe extérieure (4) qui entoure le passage d'air (3) et dans laquelle une soupape antiretour (5) avec un corps de soupape (5.1) et un siège de soupape (5.2) est disposée dans le passage d'air (3), la tige de soupape (1) étant réalisée d'une pièce et la garniture de soupape (2) étant entièrement disposée à l'intérieur de la tige de soupape (1) d'une pièce et entièrement entourée par celle-ci, avec une queue de soupape (9) qui porte ou forme le corps de soupape (5.1) et qui est supportée avec possibilité de translation axiale dans l'enveloppe extérieure (4), un poussoir (7) couplé de façon rigide à la queue de soupape (9) au moins en vue d'une translation dans le sens axial hors de l'enveloppe extérieure (4) étant en outre disposé sur la queue de soupape (9) ou formé d'une pièce avec celle-ci en plus du corps de soupape (5.1),
**caractérisée en ce que** le poussoir (7) forme un premier interstice radial avec la tige de soupape (1) ou, pour former un premier interstice radial comme interstice à zéro, repose sur l'intérieur dans le sens radial sur la tige de soupape (1) quand le poussoir (7) se trouve dans une première position axiale dans l'extrémité d'entrée d'air (3.1) de la tige de soupape (1), à partir de laquelle il peut être déplacé en translation contre une force de ressort en direction de l'extrémité de sortie d'air (3.2) dans une deuxième position axiale, dans laquelle il forme un deuxième interstice radial avec la tige de soupape (1), lequel deuxième interstice radial est plus grand que le premier interstice radial.
